# EUROPÄISCHE PATENTSCHRIFT

(11) **EP 1 158 062 B1**
(45) Veröffentlichungstag und Bekanntmachung des Hinweises auf die Patenterteilung: **27.11.2002**
(21) Anmeldenummer: 00110474.4
(22) Anmeldetag: 17.05.2000
(51) Int. Cl.: C22C 9/04

(54) **Kupfer-Zink-Aluminium-Knetwerkstoff und dessen Verwendung**
Wrought copper-zinc-aluminium alloy and its use
Alliage de cuivre-zinc-aluminium forgeable et sa utilisation

(43) Veröffentlichungstag der Anmeldung: 28.11.2001
(73) Patentinhaber: Wieland-Werke AG, 89070 Ulm (DE)
(72) Erfinder: Bögel, Andreas, 89264 Weissenhorn (DE); Feind, Jürgen, 89079 Ulm (DE); Koch, Roland, 89165 Dietenheim (DE); Kuhn, Hans-Achim, 89257 Illertissen (DE)

(56) Entgegenhaltungen:
- CH-A- 223 580
- DE-A- 2 159 482
- FR-A- 768 372
- GB-A- 529 889
- BRUNHUBER, E.: "Proposed norms for German standards DIN 1705, 1709, 1714, and 1716 (copper casting alloys) and DIN 1729 (magnesium casting alloys)" GIESSEREIPRAXIS (1971), (23), 418-20 , XP002148996

## Beschreibung

Die Erfindung betrifft einen Kupfer-Zink-Aluminium-Knetwerkstoff und dessen Verwendung als Lagerwerkstoff zur Herstellung von Lagerbuchsen, insbes. für Pleuel und Kolben in Verbrennungsmotoren.

Von guten Gleitlagerwerkstoffen werden beim Einsatz im Motorenbereich u.a. neben guten Gleiteigenschaften, Verschleißfestigkeit und guter Korrosionsbeständigkeit hohe Belastbarkeit, hohe dynamische und statische Dauerfestigkeit und ausreichende Warmfestigkeit im Einsatztemperaturbereich gefordert.

Die Steigerung von Zünddrücken zur Leistungsverbesserung der Motoren führt zu höheren Belastungen der Lagerbuchsen. Im Einsatztemperaturbereich um ca. 250 °C können Zünddrücke bis 200 bar und mehr oder spezifische Flächenbelastungen der Buchsen von 150 MPa und mehr erreicht werden. Die typische Betriebstemperatur von Kolbenbuchsen ist 180 bis 200 °C.
Lagerbuchsen aus herkömmlichen Bimetall wie Stahl-Verbund-Buchsen oder Pb-Verbundbuchsen halten spezifischen Flächenbelastungen nur bis ca. 130 MPa stand. Höhere Drücke werden dagegen von Massivbuchsen aus den gekneteten Legierungen CuZn31Si1 (DIN 17.660) und CuAl10Ni5Fe4 (DIN 17.665) beherrscht. Knetlegierungen zeichnen sich bei Verwendung für dünnwandige Lagerbuchsen wegen ihres feinkörnigen Gefüges gegenüber Gusslegierungen gleicher chemischer Zusammensetzung durch eine höhere dynamische Belastbarkeit aus.

Weiterhin dürfen sich Buchsen aus einer Legierung während ihres Einsatzes nicht aus ihrem Sitz lösen, müssen also ein gutes Setzverhalten aufweisen. Massivbuchsen werden daher mit Übermaß montiert, so dass die Buchsen z.B. im Auge eines Motorkolbens festverpresst sitzen und auch unter Temperaturbelastung über längere Zeit sich nicht in ihrem Sitz lockern können, d.h., ihr Übermaß nicht wesentlich verlieren. Das Setzverhalten der Buchse korreliert wegen der temperatur-und zeitabhängigen Umwandlung der elastischen Verformung in plastische Verformung mit dem Spannungs-Relaxations-Verhalten des Werkstoffs. Werkstoffe mit geringen Spannungsverlusten durch Relaxation weisen also ein besseres Setzverhalten der Buchse als Werkstoffe mit höheren Spannungsverlusten durch Relaxation auf. (Zum Begriff der "Spannungsrelaxation" wird beispielsweise auf die DE-OS 196 00 864 verwiesen.)

GB-A- 529 889 offenbart eine Kupfer-Zink-Aluminium-Knetlegierung, die für Lager benutzt wird, und die eine Zusammen setzung bestehend aus 55-75 Cu, 3-7 Al, 3·5-7 Mn, 0·5-4 Fe, 0-2 Ni und Rest Zink aufweist Heute üblich sind Buchsen aus gekneteten CuAI10Ni5Fe4 und CuZn31Si1. Buchsen aus der Knetlegierung CuAl10Ni5Fe4 besitzen bei hohen mechanischen Festigkeiten ein sehr gutes Setzverhalten und sind daher für höchste Belastungen über lange Zeiträume geeignet. Von Nachteil ist, dass Mehrstoff-Aluminium-Bronzen im kontinuierlichen Stranggussverfahren schwierig gießbar und im anschließenden Fertigungsschritt Strangpressen nur schwer warmumformbar sind. Beides trägt im Vergleich zur Fertigung von Buchsen aus Sondermessingen zu hohen Fertigungskosten bei. Buchsen aus Mehrstoffaluminiumbronzen besitzen zudem einen höheren Reibkoeffizienten und schlechtere Ölverträglichkeit als Buchsen aus Sondermessinglegierungen, besonders deutlich schlechter als CuZn31Si1.
Bei gleichzeitig niedrigeren mechanischen Festigkeiten setzen sich Buchsen aus der gekneteten Sondermessinglegierung CuZn31Si1 wegen ihrer vergleichsweise stärkeren Neigung zur Spannungsrelaxation stärker , sind also nur für geringere Motorbelastungen geeignet.

Der Erfindung liegt daher die Aufgabe zugrunde, einen Kupferwerkstoff anzugeben, der insbes. für den genannten Verwendungszweck eine besonders günstige Eigenschaftskombination aufweist, also die Vorteile der bisher eingesetzten Werkstoffe CuAI10Ni5Fe4 und CuZn31Si1 vereint. Der neue, insbes. für Lagerbuchsen geeignete, Werkstoff soll gegenüber dem geknetetem Sondermessing des Typs CuZn31Si1 geringere Neigung zur Spannungsrelaxation, geringeres Setzverhalten und höhere Festigkeit und gleichzeitig gegenüber Mehrstoffaluminiumbronzen des Typs Cu-Al10Ni5Fe4 bessere Zerspanbarkeit sowie für die Fertigung des Halbzeugs bessere Gleßbarkeit und Warmumformbarkeit besitzen. Lagerbuchsen aus diesem Werkstoff sollen zudem kostengünstiger fertigbar sein als Lager aus gekneteten Mehrstoffaluminiumbronzen.

Die Aufgabe wird erfindungsgemäß durch einen Kupfer-Zink-Aluminium-Knetwerkstoff gelöst, der aus 63,5 bis 66,5 % Kupfer; 2,0 bis 5,4 % Aluminium; 4,1 bis 4,9 % Mangan; 2,6 bis 3,4 % Eisen; 1,1 bis 1,9 % Nickel; Rest Zink und üblichen Verunreinigungen besteht (die Prozentangaben beziehen sich dabei auf das Gewicht).

Die erste Teilaufgabe, nämlich einen gegenüber der Mehrstoffaluminiumbronze CuAI10Ni5Fe4 besser gießbaren und leichter warm und kaltumformbaren Werkstoff für Lagerbuchsen mit den aufgabengemäßen Eigenschaften bessere Zerspanbarkeit und Ölkorrosionsbeständigkeit zu suchen, wird durch den erfindungsgemäßen Werkstoff gelöst; denn der Schmelzpunkt von 960 °C des erfindungsgemäßen Werkstoffs ist niedriger als der für Mehrstoffaluminiumbronzen, entsprechend wird energiesparend bei niedrigerer Temperatur geschmolzen und anschließend auch bei niedrigeren Temperaturen gegossen. Die Beherrschbarkeit des Stranggusses wird durch den hohen Anteil Zink gewährleistet. Der erfindungsgemäße Werkstoff ähnelt in seiner Gießbarkeit den üblichen leicht beherrschbaren Sondermessingen.

Wegen seiner geringeren Warmfestigkeit läßt sich der erfindungsgemäße Werkstoff gegenüber der mehrphasigen Aluminiumbronze bei um 100 bis 150 °C tieferen Presstemperaturen kneten. Damit wird Energie für die Beheizung des der Warmpresse vorgeschalteten Blockofens gespart.

Die zweite Teilaufgabe, nämlich einen Werkstoff für Lagerbuchsen mit gegenüber Lagerbuchsen aus geknetetem Sondermessing CuZn31Si1 verbessertem Spannungsrelaxationsverhalten und damit geringerem Setzverhalten zu entwickeln, wird mit dem erfindungsgemäßen Knetwerkstoff in gleicher Weise erfüllt.

Es ist zwar eine Gußlegierung ähnlicher Zusammensetzung bekannt (CuZn25Al5Mn4Fe3-C/EN 1982 ≙ CuZn25Al5 nach der älteren DIN 1709), demgegenüber liegt aber eine gezielte Auswahl vor . Es zeigt sich nämlich überraschend, dass mit der getroffenen Auswahl aus der für den Gusswerkstoff angegebenen Zusammensetzung eine Verarbeitung durch Kneten im warmen und kalten Zustand möglich ist, und auch noch die besonders hohen Anforderungen an Lagerwerkstoffe erfüllt werden. Darüber hinaus zeichnet sich der erfindungsgemäße Knetwerkstoff gegenüber dem bekannten Gußwerkstoff durch ein besseres Setzverhalten aus.

Gegenstand der Ansprüche 2 bis 4 sind bevorzugte Zusammensetzungen des erfindungsgemäßen Kupfer-Knetwerkstoffs.

Aufgrund der geschilderten Vorteile wird der erfindungemäße Kupfer-Knetwerkstoff vorzugsweise als Lagerwerkstoff zur Herstellung von Lagerbuchsen, insbes. für Pleuel und Kolben in Verbrennungsmotoren, verwendet.

### Die Erfindung wird anhand des folgenden Ausführungsbeispiels näher erläutert:

Tabelle 1 zeigt die Zusammensetzung zweier erfindungsgemäßer Kupfer-Knetwerkstoffe (Nr. 1, 2).

**Tabelle 1**

| Zusammensetzung der Proben (Angaben in Gewichts-%) | | | | | | |
|---|---|---|---|---|---|---|
| Probenbezeichnung | Cu | Zn | Al | Mn | Fe | Ni |
| 1 | 66 | 20 | 5 | 4,5 | 3 | 1,5 |
| 2 | 65,7 | 22 | 3,3 | 4,5 | 3 | 1,5 |

Eine Kupfer-Legierung gemäß Probenbezeichnung 1/Tabelle 1) wird im Ausführungsbeispiel in Form runder Bolzen von 154 mm Durchmesser und 280 mm Länge in zylindrische Kokillen vergossen. In der betrieblichen Fertigung gelingt dies mit der Technik des kontinuierlichen oder halbkontinuierlichen Stranggusses mit ofenunabhängiger Kokille.

Die Liquidustemperatur ist mit 960 °C um 97 °C niedriger als die der für Lagerbuchsen bereits bekannten Mehrstoffaluminiumbronze CuAl10Ni5Fe4. Damit ergibt sich in der betrieblichen Fertigung die Möglichkeit, Schmelzeöfen und Warmhalteöfen bzw. Vergießöfen bei tieferen Temperaturen als für Mehrstoffaluminiumbronzen zu betreiben und somit gegenüber dem Schmelz-Gieß-Prozess Energie zu sparen. Wegen der geringeren Schmelzetemperatur und des zusammensetzungsbedingten geringeren Aluminium- und Nickelanteils, sowie des hohen Zinkanteils ist die Wasserstoffaufnahme der Schmelze geringer als in der Mehrstoffaluminiumbronze. Während der Erstarrung werden daher kaum Poren entstehen. Die im kontinuierlichen oder halbkontinuierlichen Strangguss der höher aluminiumhaltigen Mehrstoffaluminiumbronzen oft sehr faltige und rauhe aluminium- und manganoxidhaltige, mit Einschlüssen des Kokillenabdeckmittels verunreinigte Gusshaut läßt sich mit einer Legierungszusammensetzung des Ausführungsbeispiels einfacher glatt und fehlerfrei darstellen.

280 mm lange Gussbolzen der erfindungsgemäßen Zusammensetzung werden nun zur Entfernung der Gusshaut überdreht und mit einer direkt wirkenden Strangpresse zwischen 720 und 770 °C Bolzentemperatur zu Pressrohren der Abmessung Innendurchmesser 40 mm und Aussendurchmesser 47 mm (= 40 x 47 mm) sowie 22 mm Innendurchmesser und 33 mm Aussendurchmesser (= 22 x 33 mm) verpresst. Die Presstemperatur ist um ca. 130 bis 150 °C niedriger als die für das Verpressen von Mehrstoffaluminiumbronzen.

Die Eigenschaften der Pressrohre 40 x 47 mm der erfindungsgemäßen Zusammensetzung sind mit Streckgrenzen R_{p0,2} von 437 bis 510 MPa, maximalen Zugfestigkeiten Rₘ von 773 bis 817 MPa, Bruchdehnungen A5 von 15 bis 20,9 % sowie Härten HB 2,5/62,5 von 197 bis 201 (214 bis 221 HV10) überraschenderweise sehr hoch. Für Kaltumformung reicht die Duktilität sehr gut aus. Für die kleinere Rohrabmessung 22 x 33 mm wurden 369 bis 412 MPa Streckgrenze, 746 bis 788 MPa Zugfestigkeit, 22,5 bis 25,8 % Dehnung A5, sowie Härten HB 2,5/62,5 von 185 bis 194 (201 bis 213 HV10) gemessen. Versuche mit im Labor gefertigten Bandstreifen für Messungen der Relaxation wurden parallel dazu gefertigt. Die mechanischen Kennwerten von bei 800 °C warmgewalzten Streifen sind mit R_{p0,2} von 408 MPa, einer max. Zugfestigkeit von 746 MPa, einer Bruchdehnung A5 von 20,4 % sowie Härten HB von 197 bzw. HV von 218 denen der gepreßten Rohre gleich. Damit werden in beiden Fällen die mechanischen Eigenschaften von für Vergleichszwecke ebenfalls warmgewalzten Bandproben aus der für Lagerbuchsen herkömmlich verwendeten Sondermessinglegierung CuZn31Si1 mit lediglich 141 MPa Streckgrenze R_{p0,2}, 419 MPa max. Zugfestigkeit und einer Härte HV10 von 96 in dem Fertigungsstadium nach der Warmumformung deutlich übertroffen.

Das Gefüge der Pressrohre des Ausführungsbeispiels ist durch eine nadelige Struktur mit 40 bis 75 % β-Phase gekennzeichnet.

In der weiteren Fertigung bis zur maßgenauen Lagerbuchse werden die Pressrohre an 45 mm Aussendurchmesser und 3,5 mm Wandstärke (45 x 3,5 mm) bzw 31 x 5,5 mm hohlgezogen und anschließend 3 h bei 300 °C thermisch entspannt. Danach werden für die größere Rohrabmessung Streckgrenzen R_{p0,2} von 532 bis 619 MPa, max. Zugfestigkeiten Rₘ von 795 bis 892 MPa, Dehnungen A5 von 12 bis 17,9 %, Härten HB2,5/62,5 von 211 bis 233 bzw. HV10 von 241 bis 261 erreicht. Für die kleinere Buchsenabmessung werden Streckgrenzen von 558 bis 621 MPa, mit Dornzug sogar 642 bis 672 MPa, max. Zugfestigkeiten von 806 bis 824 (Dornzug 833 bis 848 MPa), Dehnungen A5 von 15 bis 17,7 % (mit Dornzug von 15,7 bis 16), Härten HB von 211 bis 225 (mit Dornzug von 214 bis 218) bzw HV10 von 211 bis 249 (246 bis 248) erzielt.

Das Gefüge besitzt im entspannten Zustand zwischen 20 und 70% β-Phase.

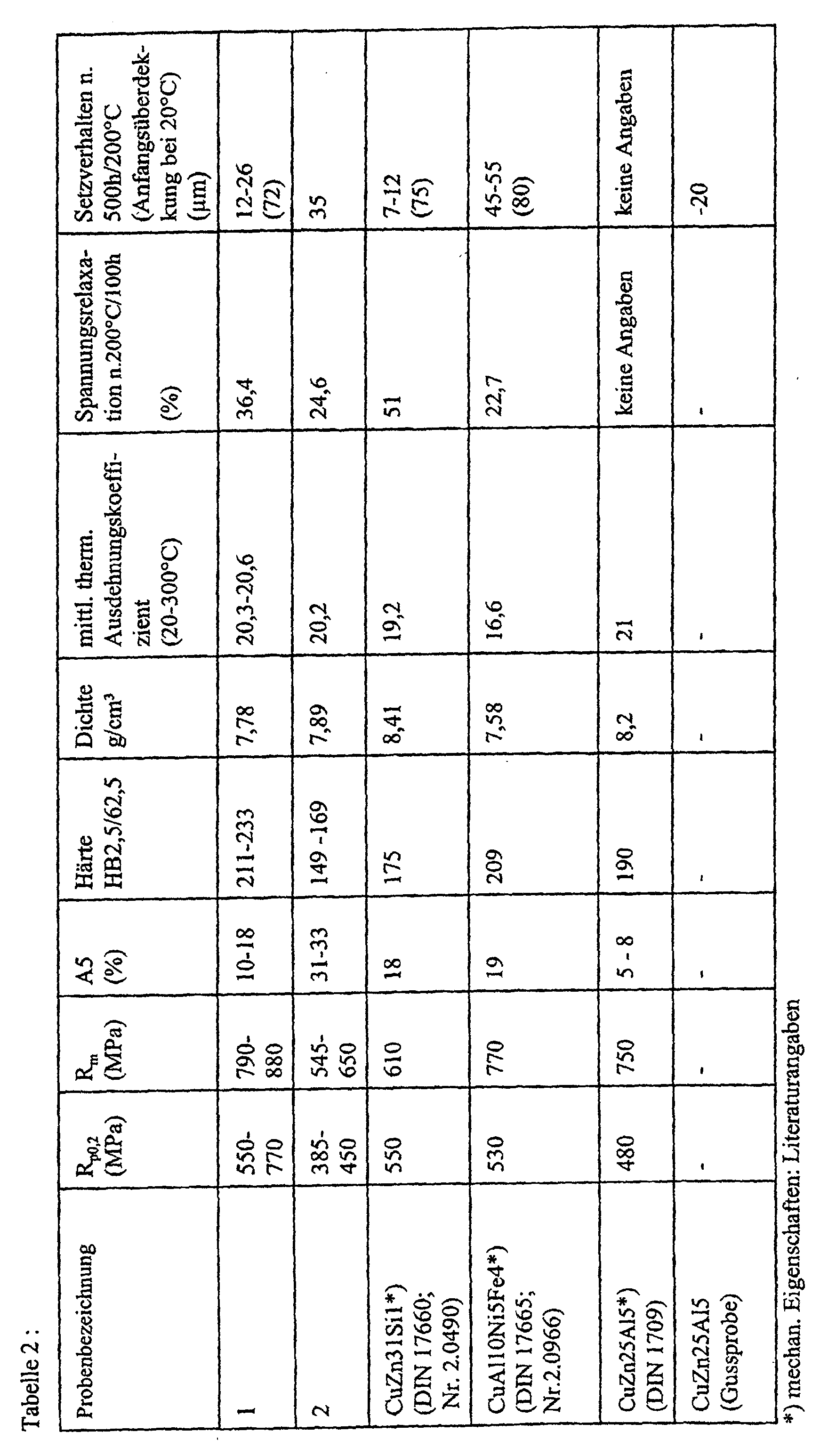

In Tabelle 2 sind die mechanischen Eigenschaften der erfindungsgemäßen Knetwerkstoffe (Proben 1 und 2) mit den mechanischen Eigenschaften der als Lagerlegierungen bereits bekannten Knetwerkstoffe CuAl10Ni5Fe4 und CuZn31Si1 sowie einem Gußwerkstoff CuZn25Al5 (ältere DIN 1709) verglichen. (Bezüglich der Vergleichswerkstoffe wurden dabei Literaturangaben herangezogen. Für die Untersuchung des Setzverhaltens wurde zusätzlich eine Gussprobe der genormten Zusammensetzung CuZn25Al5 ≙ CuZn25Al5Mn4Fe3-C/EN 1982 hergestellt). Demnach übertrifft das in ihrem Fertigungsgang beschriebene Ausführungsbeispiel Probe 1des erfindungsgemäßen Werkstoffs die Festigkeitskennwerte von gekneteten für Lagerbuchsen geeigneten Rohre aus CuZn31Si1 und CuAI10Ni5Fe4 deutlich und besitzt jedoch ebenfalls überraschenderweise mit der Bruchdehnung A5 von 10 bis 18 % die gleiche Duktilität. Rohre aus der nach der älteren DIN 1709 genormten Gußlegierung erreichen ebenfalls nicht die Festigkeit und liegen mit einer niedrigen Duktilität deutlich hinter der erfindungsgemäßen Knetlegierung und CuZn31Si1. Die erfindungsgemäße Legierung des Ausführungsbeispiels 1 übertrifft bei gleicher Festigkeit zudem im gekneteten Zustand deutlich die Duktilität der Gußlegierung .

Das Spannungsrelaxationsverhalten von ausgewalzten Bändern nach langen Zeiten unter Einsatztemperatur und unter vorgegebenen Anfangsprüfspannungen läßt eine Trendaussage über das Setzverhalten unter Temperaturbelastung von unter Übermaß eingeschrumpften Buchsen zu . Tabelle 2 zeigt den Spannungsverlust von Bändern aus dem erfindungsgemäßen Werkstoff gemäß Probe 1 und 2 nach 100 h /200 °C im Vergleich mit Bandproben aus CuAl10Ni5Fe4 und CuZn31Si1 (Messverfahren beschrieben in DE-OS 196 00 864). Demnach zeigt die Mehrstoffaluminiumbronze mit 23 % die geringste Relaxation der Anfangsspannung, der erfindungsgemäße Werkstoff aber überraschenderweise mit 36,4 (Probe 1) bzw. 24 % (Probe 2) ähnliche Werte und deutlich geringere Relaxation als CuZn31Si1 mit 51 %. Die Probe 2 mit gegenüber Probe 1 geringerem AI-Gehalt von 3,3 Gewichts-% weist die niedrigste Spannungsrelaxation der erfindungsgemäßen Werkstoffe auf.

Das Setzverhalten wird an aus den beschriebenen gezogenen und entspannten Rohren gedrehten und geschliffenen Buchsen der Abmessung 25,2 x 29,5 x 23 mm bzw. 39 x 43,8 x 30 mm ermittelt. Dafür werden die Buchsen unter Übermaß (= Überdeckung) von 55 bis 125 µm in eine einem Kolbenauge entsprechende Fassung eingeschrumpft und 500 h unter 200 °C getempert.
Nach dem Versuch werden die thermisch und mechanisch belasteten Buchsen wieder aus der Fassung ausgepresst und erneut vermessen. Die Überdeckung ist nun aufgrund der unter der thermo-mechanischen Belastung abgelaufenen plastischen Verformung geringer als vor dem Einschrumpfen der Buchse. Das sogenannte Setzverhalten wird durch die Restüberdeckung beschrieben. Für die Buchsen der Mehrstoffaluminiumbronzen fällt diese Restüberdeckung mit am höchsten aus, das Setzverhalten ist also am geringsten. Beispielsweise wurde an den größeren Buchsen für CuAl10Ni5Fe4 bei 125 µm Ausgangsüberdeckung noch 55 bis 75 µm Restüberdekkung ermittelt, für das Ausführungsbeispiel noch 15 bis 30 µm. CuZn31Si1 weist mit 0 bis 16 µm das schlechteste Setzverhalten der Knetwerkstoffe auf.
Aus der Gusslegierung der Zusammensetzung CuZn25AI5 gedrehte Buchsen rutschen im Setzversuch aus dem Stahlring, haben also nach Beendigung des Versuchs eine negative Restüberdeckung von -20µm.

In der Fig. ist das Restüberdeckungsverhältnis (Restüberdeckung nach 500h/200°C /Ausgangsüberdeckung bei Raumtemperatur) für den erfindungsgemäßen Werkstoff und zwei Vergleichswerkstoffe in Abhängigkeit von der Spannungsrelaxation dargestellt.

Im 100 h/180 °C Test zur Ölkorrosionsbeständigkeit zeigte der erfindungsgemäße Werkstoff mit Abtragtiefen unter 2 µm deutlich geringere Abtragtiefen als die Mehrstoffaluminiumbronzen. Hier wurden teilweise Werte über 4µm bis 6µm gefunden.

Auch fällt die Zerspanbarkeit mit ca 30 % der Zerspanbarkeit des als Zerspanungswerkstoff bekannten CuZn39Pb3 günstiger aus als die der Mehrstoffaluminiumbronze mit 20%.

Mit einer spezifischen Dichte von lediglich 7,78 g/cm³ sind Buchsen aus dem erfindungsgemäßen Werkstoff deutlich leichter als Buchsen der Sondermessinglegierung CuZn31Si1 1 mit 8,4g/cm³ und vergleichbar mit herkömmlichen Mehrstoffaluminiumbronzen von 7,56 g/cm³.

Die mechanischen Eigenschaften Festigkeit, Relaxationsverhalten und Setzverhalten sind der Knetlegierung CuZn31Si1 überlegen. Gusslegierungen des Typs CuZn25Al5 nach der älteren DIN 1709 erreichen nicht die Duktilität der erfindungsgemäßen Zusammensetzung und erlauben daher nicht die Fertigung durch Warm- und Kaltumformung (Kneten).

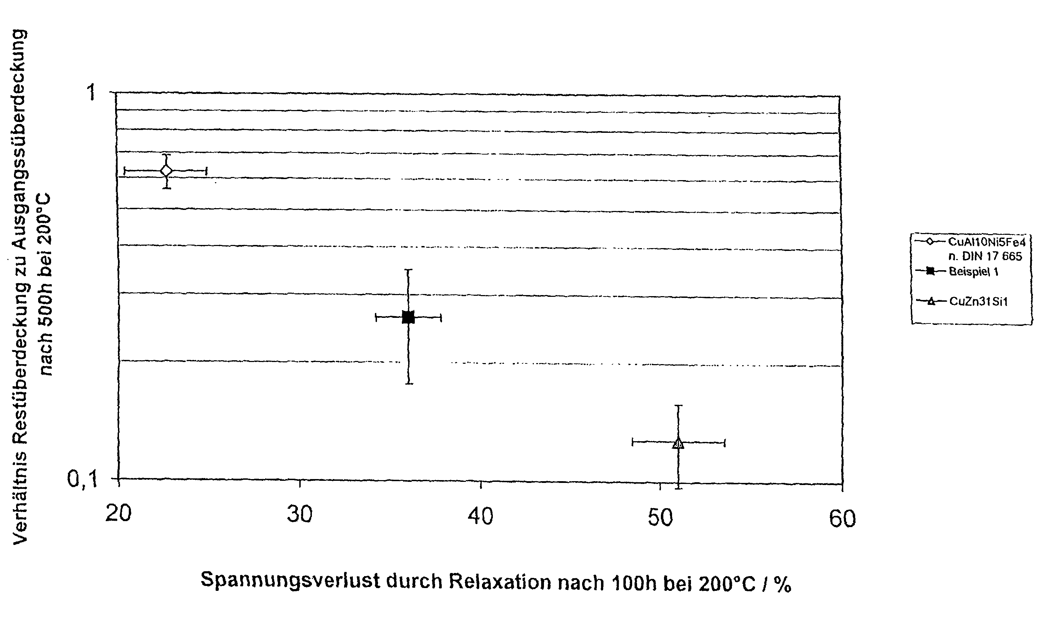

## Patentansprüche

1. Kupfer-Zink-Aluminium-Knetwerkstoff mit hoher Beständigkeit gegen Spannungsrelaxation und mit geringem Setzverhalten,
**dadurch gekennzeichnet,**
**daß** er aus 63,5 bis 66,5 % Kupfer; 2,0 bis 5,4 % Aluminium;
4,1 bis 4,9 % Mangan; 2,6 bis 3,4 % Eisen; 1,1 bis 1,9 % Nickel; Rest Zink und üblichen Verunreinigungen besteht.

2. Kupfer-Knetwerkstoff nach Anspruch 1, **dadurch gekennzeichnet,**
**daß** er aus 65,5 bis 66,5 % Kupfer; 3,1 bis 5,4 % Aluminium;
4,1 bis 4,7 % Mangan; 2,6 bis 3,4 % Eisen; 1,1 bis 1,9 % Nickel; Rest Zink und üblichen Verunreinigungen besteht.

3. Kupfer-Knetwerkstoff nach Anspruch 1 oder 2, **dadurch gekennzeichnet,**
**daß** er aus 65,5 bis 66,5 % Kupfer; 3,1 bis 3,9 % Aluminium;
4,1 bis 4,7 % Mangan; 2,6 bis 3,4 % Eisen; 1,1 bis 1,9 % Nickel; Rest Zink und üblichen Verunreinigungen besteht.

4. Kupfer-Knetwerkstoff nach einem oder mehreren der Ansprüche 1 bis 3,
**dadurch gekennzeichnet,**
**daß** er aus 65,5 bis 66,0 % Kupfer; 3,1 bis 3,9 % Aluminium;
4,1 bis 4,7 % Mangan; 2,6 bis 3,4 % Eisen; 1,4 bis 1,6 % Nickel; Rest Zink und üblichen Verunreinigungen besteht.

5. Verwendung des Kupfer-Knetwerkstoffs nach einem oder mehreren der Ansprüche 1 bis 4 als Lagerwerkstoff zur Herstellung von Lagerbuchsen, insbes. für Pleuel und Kolben in Verbrennungsmotoren.

## Claims

1. Wrought copper-zinc-aluminium material having a high resistance to stress relaxation and having low settling properties, **characterised in that** it comprises
from 63.5 to 66.5% of copper; from 2.0 to 5.4% of aluminium;
from 4.1 to 4.9% of manganese; from 2.6 to 3.4% of iron; from 1.1 to 1.9% of nickel;
remainder zinc and usual impurities.

2. Wrought copper material according to claim 1, **characterised in that** it comprises
from 65.5 to 66.5% of copper; from 3.1 to 5.4% of aluminium;
from 4.1 to 4.7% of manganese; from 2.6 to 3.4% of
iron; from 1.1 to 1.9% of nickel;
remainder zinc and usual impurities.

3. Wrought copper material according to claim 1 or 2, **characterised in that** it comprises
from 65.5 to 66.5% of copper; from 3.1 to 3.9% of aluminium;
from 4.1 to 4.7% of manganese; from 2.6 to 3.4% of
iron; from 1.1 to 1.9% of nickel;
remainder zinc and usual impurities.

4. Wrought copper material according to one or more of claims 1 to 3, **characterised in that** it comprises
from 65.5 to 66.0% of copper; from 3.1 to 3.9% of aluminium;
from 4.1 to 4.7% of manganese; from 2.6 to 3.4% of
iron; from 1.4 to 1.6% of nickel;
remainder zinc and usual impurities.

5. Use of the wrought copper material according to one or more of claims 1 to 4 as a bearing material for the manufacture of bearing bushes, especially for connecting rods and pistons in internal combustion engines.

## Revendications

1. Matériau de corroyage à base de cuivre, de zinc et d'aluminium à haute résistance contre la relaxation des contraintes et à faible comportement de logement, **caractérisé en ce qu'**il consiste en 63,5 à 66,5 % de cuivre, 2,0 à 5,4 % d'aluminium, 4,1 à 4,9 % de manganèse, 2,6 à 3,4 % de fer, 1,1 à 1,9 % de nickel, le reste étant du zinc et des impuretés courantes.

2. Matériau de corroyage à base de cuivre selon la revendication 1, **caractérisé en ce qu'**il consiste en 65,5 à 66,5 % de cuivre, 3,1 à 5,4 % d'aluminium, 4,1 à 4,7 % de manganèse, 2,6 à 3,4 % de fer, 1,1 à 1,9 % de nickel, le reste étant du zinc et des impuretés courantes.

3. Matériau de corroyage à base de cuivre selon la revendication 1 ou 2, **caractérisé en ce qu'**il consiste en 65,5 à 66,5 % de cuivre, 3,1 à 3,9 % d'aluminium, 4,1 à 4,7 % de manganèse, 2,6 à 3,4 % de fer, 1,1 à 1,9 % de nickel, le reste étant du zinc et des impuretés courantes.

4. Matériau de corroyage à base de cuivre selon une ou plusieurs des revendications 1 à 3, **caractérisé en ce qu'**il consiste en 65,5 à 66,0 % de cuivre, 3,1 à 3,9 % d'aluminium, 4,1 à 4,7 % de manganèse, 2,6 à 3,4 % de fer, 1,4 à 1,6 % de nickel, le reste étant du zinc et des impuretés courantes.

5. Utilisation du matériau de corroyage à base de cuivre selon une ou plusieurs des revendications 1 à 4 comme matériau de palier pour la fabrication de coussinets de palier, en particulier pour bielles et pistons dans des moteurs à combustion interne.
